# EUROPEAN PATENT APPLICATION

(11) **EP 0 812 539 A1**
(43) Date of publication of application: **17.12.1997**
(21) Application number: 97303347.5
(22) Date of filing: 16.05.1997
(51) Int. Cl.: A01N 37/22

(54) **Synergistic herbicidal compositions**

(30) Priority: 23.05.1996 US 19431
(71) Applicant: ROHM AND HAAS COMPANY, Philadelphia, Pennsylvania 19106-2399 (US)
(72) Inventor: Fisher, James Delbert, Lansdale, Pennsylvania 19446 (US); Spangler, Lori Ann, Churchville, Penssylvania 18966 (US); Lidert, Zev, Doylestown, Pennsylvania 18901 (US)
(74) Representative: Tanner, James Percival

(57) **Abstract**

The present invention relates to compositions, having herbicidal synergistic effects, comprising
(i) propanil;
(ii) a compound of the formula 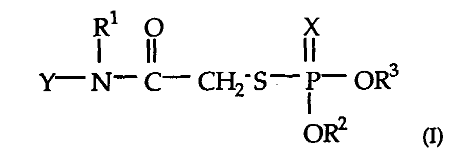 wherein
   R¹ is alkyl, alkoxy, cycloalkyl, alkoxycarbonylalkyl or alkoxyalkyl;
   R² and R³ are each independently alkyl, cycloalkyl or together with the oxygen atoms to which they are attached form a five or six membered heterocyclic ring containing the phosphorous atom;
   X is an oxygen or a sulfur atom; and
   Y is phenyl or phenyl substituted with up to three substituents independently selected from halogen atoms, nitro, cyano, alkyl, haloalkyl, alkoxy and haloalkoxy; or is thienyl or thienyl substituted with up to two substituents independently selected from halogen atoms and alkyl; and
(iii) an agronomically acceptable carrier
for the control of various grasses and broadleaf weeds in rice. More particularly, such compositions exhibit synergistic properties for selectively controlling weeds in rice, especially grassy weeds such as Barnyardgrass, Junglerice, Signalgrass and Sprangletop.

This invention also relates to a method of controlling weed species in rice comprising applying a herbicidally effective amount of a composition comprising (i) propanil, (ii) a compound of formula (I) and (iii) an agronomically acceptable carrier to the weed, to the locus of the weed or to the growth medium of said weed.

## Description

The present invention relates to compositions having herbicidal synergistic effects. In particular, the present invention relates to the use of compositions comprising propanil, also known as N-(3,4-dichlorophenyl)propanamide, anilofos, also known as S-[N-(4-chloropheny)-N-isopropylcarbamoylmethyl]-O,O-dimethyldithiophosphate, or other phosphate compounds structurally related to anilofos, and an agronomically acceptable carrier as selective postemergence compositions for the control of various grasses and broadleaf weeds in rice. More particularly, such compositions exhibit synergistic properties for selectively controlling weeds in rice, especially grassy weeds such as Bamyardgrass, Junglerice, Signalgrass and Sprangletop. Such compositions are especially noteworthy for control of Junglerice, some biotypes of which show resistance to conventional herbicide treatments.

Typical compositions containing chemical weed control agents enable more efficient crop production by minimization of competing plant growth. New chemical means of controlling such unwanted vegetation are desirable in order to obtain better control of various agronomically important weeds, for better crop safety and to overcome herbicide resistance. Although many herbicides, including both propanil and anilofos, are well known individually as chemical weed control agents for rice crops, their control is not sufficient at normal dosage rates to control certain grassy weeds effectively. The resulting competition from such weeds attenuates the yield of rice from the plantings with its attendant economic disadvantage. If the dosage rates of either propanil or anilofos are increased to the extent necessary to effectively control the weed species, selectivity to the rice crop itself is diminished. This again attenuates the yield of rice. A need therefore exists for a more economical and a more selective method for controlling such weed species in rice crops.

It has been unexpectedly found that compositions comprising propanil and anilofos, or another phosphate compound structurally related to anilofos, result in enhanced control of weed species in rice, especially grassy weed species, without an increase in dosage rate and its attendant selectivity problems to the rice crop. The herbicidal compositions may be applied to the rice crop or to the locus where the rice crop is to be grown either before the emergence of the undesired weed vegetation or, more preferably, after the emergence of the undesired weed vegetation.

US 5,212,193 discloses synergistic antimicrobial compositions of propanil and 2-alkyl-3-isothiazolones, but no herbicidal compositions are suggested. DE 42 41 629 Al and DE 42 09 475 Al both disclose synergistic herbicidal compositions of sulphonyl ureas and various other herbicides, including propanil and anilofos, but the composition of propanil and anilofos in the absence of a sulfonyl urea is not suggested.

The herbicidal compositions of this invention comprise
(i) propanil;
(ii) a compound of the formula 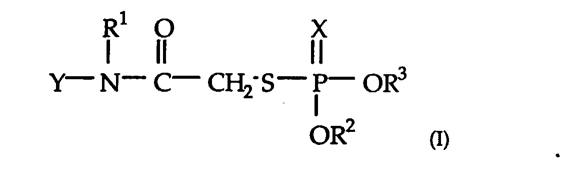 wherein
   R¹ is alkyl, alkoxy, cycloalkyl, alkoxycarbonylalkyl or alkoxyalkyl;
   R² and R³ are each independently alkyl, cycloalkyl or together with the oxygen atoms to which they are attached form a five or six membered heterocyclic ring containing the phosphorous atom;
   X is an oxygen or a sulfur atom; and
   Y is phenyl or phenyl substituted with up to three substituents independently selected from halogen atoms, nitro, cyano, alkyl, haloalkyl, alkoxy and haloalkoxy; or is thienyl or thienyl substituted with up to two substituents independently selected from halogen atoms and alkyl; and
(iii) an agronomically acceptable carrier.

As used to describe the present invention, the term "alkyl", whether alone or as part of another group, refers to a straight or branched chain alkyl. Examples of alkyl include (without limiting) methyl, ethyl, *n*-propyl, isopropyl, *n*-butyl, *sec*-butyl, isobutyl, *tert*-butyl, *n*-pentyl, isopentyl, neopentyl, hexyl, isohexyl, *sec*-hexyl,
2,2-dimethylbutyl and 2,3-dimethylbutyl; and, as further illustration, examples of alkoxy include methoxy, ethoxy, *n*-propoxy, isopropoxy, *n*-butoxy, *sec-*butoxy, isobutoxy, *tert*-butoxy, isopentoxy, *n*-pentoxy, neopentoxy, hexyloxy, isohexyloxy, *sec*-hexyloxy, 2,2-dimethylbutoxy and 2,3-dimethylbutoxy. "Cycloalkyl", whether alone or as part of another group, refers to a monocyclic nonaromatic carbocyclic ring. Examples of cycloalkyl include, but are not limited to, cyclopropyl, cyclobutyl, cyclopentyl and cyclohexyl. "Haloalkyl" and "haloalkoxy" refer to an alkyl and alkoxy group, respectively, substituted with from one to five halogen atoms, preferably from one to three halogen atoms, preferably fluorine or chlorine atoms. Examples of haloalkyl and haloalkoxy include, but are not limited to, trifluoromethyl, difluoromethoxy, 2,2,2-trifluoroethoxy, 2-chloroethoxy and trifluoromethoxy. "Halo" includes fluoro, chloro, bromo and iodo. "Alkoxycarbonylalkyl" refers to an alkoxy group which is bonded to a carbonyl group which is in turn bonded to an alkyl group. Examples of alkoxycarbonylalkyl include, but are not limited to, methoxycarbonylmethyl, *n*-butoxycarbonylmethyl and 2-(methoxycarbonyl)ethyl. "Alkoxyalkyl" refers to an alkoxy group which is bonded to an alkyl group. Examples of alkoxyalkyl include, but are not limited to, methoxymethyl, 1-methoxy-2-propyl and 1-(*n*-butoxy)-2-propyl.

In a preferred embodiment, the herbicidal compositions of this invention comprise a propanil and a compound of formula (I) wherein
R¹ is (C₁-C₄)alkyl, cyclo(C₃-C₆)alkyl, (C₁-C₄)alkoxy, (C₁-C₄)alkoxycarbonyl(C₁-C₂)alkyl or (C₁-C₄)alkoxy(C₁-C₄)alkyl;
R² and R³ are each independently (C₁-C₄)alkyl, cyclo(C₃-C₆)alkyl or together with the oxygen atoms to which they are attached form a five or six membered heterocyclic ring containing the phosphorous atom;
X is an oxygen or a sulfur atom; and
Y is phenyl or phenyl substituted with up to three substituents independently selected from fluoro, chloro, bromo, nitro, cyano, (C₁-C₄)alkyl, halo(C₁-C₄)alkyl, (C₁-C₄)alkoxy and halo(C₁-C₄)alkoxy; or is thienyl or thienyl substituted with up to two substituents independently selected from fluoro, chloro, bromo and (C₁-C₄)alkyl.

In a more preferred embodiment, the herbicidal compositions of this invention comprise propanil and a compound of formula (I) wherein
R¹ is (C₂-C₄)alkyl;
R² and R³ are each independently (C₁-C₃)alkyl, cyclo(C₃-C₆)alkyl or together with the oxygen atoms to which they are attached form a five or six membered heterocyclic ring containing the phosphorous atom;
X is an oxygen or a sulfur atom; and
Y is phenyl, 3-methylphenyl, 4-methylphenyl, 2,6-dimethylphenyl, 3-methoxyphenyl, 4-methoxyphenyl, 2-nitrophenyl, 3-nitrophenyl, 4-nitrophenyl, 4-fluorophenyl, 4chlorophenyl, 4-bromophenyl, 3-trifluoromethylphenyl, 3,5-bis(trifluoromethyl)phenyl, 3-trifluoromethyl-4-methoxyphenyl, 3-bromophenyl, 3-chlorophenyl, 3-fluorophenyl, 3-trifluoromethoxyphenyl, 3-cyanophenyl, 4-cyanophenyl, 2-fluorophenyl, 2-chlorophenyl, 2-trifluoromethoxyphenyl, 3,5-difluorophenyl, 2,3-dichlorophenyl, 2,4-dichlorophenyl, 3,4-dichlorophenyl, 2,5-dichlorophenyl, 3,5-dichlorophenyl, 2,4-difluorophenyl, 3-chloro-2-fluorophenyl, 2,5-difluorophenyl, 3-chloro-4-fluorophenyl, 3,4-difluorophenyl, 3-fluoro-5-trifluoromethylphenyl, 3-chloro-4,6-difluorophenyl, 3,4,5-trifluorophenyl, 2-thienyl, 3-thienyl, 4-chloro-2-thienyl, 5-chloro-2-thienyl, 5-chloro-3-thienyl or 2,5-dichloro-3-thienyl.

In an even more preferred embodiment, the herbicidal compositions of this invention comprise propanil and a compound of formula (I) wherein
R¹ is *n*-propyl or isopropyl;
R² and R³ are each independently methyl, ethyl, n-propyl or isopropyl;
X is a sulfur atom; and
Y is phenyl, 4-fluorophenyl, 4-chlorophenyl, 3-fluorophenyl, 3,5-difluorophenyl, 3,5-dichlorophenyl, 3-chloro-4-fluorophenyl, 3-chlorophenyl, 2-thienyl or 5-chloro-3-thienyl.

In a still even more preferred embodiment, the herbicidal compositions of this invention comprise propanil and a compound of formula (I) wherein
R¹ is isopropyl;
R² and R³ are each independently methyl, ethyl, *n*-propyl or isopropyl; and
Y is 4-fluorophenyl or 4 chlorophenyl.

The most preferred herbicidal composition comprises propanil and anilofos which is a compound of formula (I) wherein R¹ is isopropyl, R² and R³ are each methyl, X is a sulfur atom and Y is 4-chlorophenyl.

A second embodiment of this invention relates to a method of controlling weed species in rice comprising applying a herbicidally effective amount of a composition comprising (i) propanil, (ii) a compound of formula (I) and (iii) an agronomically acceptable carrier to the weed, to the locus of the weed or to the growth medium of said weed. The relative proportion of the amount of propanil to a compound of formula (I) to be used for enhanced control of weed species in rice may vary from about 64 to about 4 parts by weight of propanil to about one part by weight of a compound of formula (I). Preferably, the proportion is from about 32 to about 4 parts by weight of propanil to about one part by weight of a compound of formula (I). More preferably, the proportion is from about 16 to about 4 parts by weight of propanil to about one part by weight of a compound of formula (I).

The compositions of this invention are useful in both preemergence and postemergence applications, particularly in postemergence applications. Preemergence compositions are usually applied to the soil either before, during or after seeding, but before the crop emerges. Postemergence herbicides are applied after the plants have emerged and during their growth period. The embodied compositions show selectivity to rice while exhibiting good control of Barnyard grass, Junglerice, Signalgrass and Sprangletop.

Under some conditions the compositions of the invention may be incorporated into the soil or other growth medium prior to planting a crop. This incorporation may be by any convenient means, including mixing with the soil, applying the compound to the surface of the soil and then discing or dragging into the soil to the desired depth, or by employing a liquid carrier.

The compositions of the present invention can be applied to various loci such as the soil or the foliage. The compositions are usually taken up in a carrier or are formulated so as to render them suitable for subsequent dissemination as a herbicidal composition. For example, these chemical agents can be formulated as wettable powders, emulsifiable concentrates, dusts, granular formulations, aerosols, or flowable emulsion concentrates. In such formulations, the compositions are extended with a liquid or solid carrier and, when desired, suitable surfactants are incorporated.

It is usually desirable, particularly in the case of foliar spray formulations, to include adjuvants, such as wetting agents, spreading agents, dispersing agents, stickers, adhesive and the like in accordance with agricultural practices. Such adjuvants commonly used in the art can be found in the John W. McCutcheon, Inc. publication "Detergents and Emulsifiers, Annual." Allured Publishing Company, Ridgewood, New Jersey, U.S.A.

The compositions of this invention can be applied as herbicidal sprays by methods commonly employed, such as conventional high-gallonage hydraulic sprays, low-gallonage sprays, air-blast spray, aerial sprays and dusts. The dilution and rate of application will depend upon the type of equipment employed, the method of application and weeds to be controlled, but the preferred effective amount is usually at about 1.2 kg. per hectare of the active ingredient propanil and from about 0.3 kg. per hectare to about 0.02 kg. per hectare of the active ingredient of formula (I).

The compositions of this invention can also be mixed with fertilizers or fertilizing materials before their application. In one type of solid fertilizing composition in which the compositions of this invention can be used, particles of a fertilizer or fertilizing ingredients, such as ammonium sulfate, ammonium nitrate, or ammonium phosphate, can be coated with a composition of this invention. The solid compounds and solid fertilizing material can also be admixed in mixing or blending equipment, or they can be incorporated with fertilizers in granular formulations. Any relative proportion of fertilizer can be used which is suitable for the crops and weeds to be treated. These compositions provide fertilizing materials which promote the rapid growth of desired plants, and at the same time control the growth of undesired plants.

Some embodiments of the present invention will now be described in the following Examples.

### Examples

The herbicidal activity of the compositions of the present invention towards a number of common weeds was evaluated using a greenhouse method of testing. Using the greenhouse test methods described below, propanil, anilofos, and the compositions of the present invention comprising propanil and anilofos were evaluated for control of weeds in rice selected from the following:

| Common Name | Code | Scientific name |
|---|---|---|
| Barnyardgrass | (BYG) | *Echinochloa crus-galli* |
| Junglerice | (JUN) | *Echinochloa colonum* |
| Signalgrass | (SIG) | *Brachiaria platyphylla* |
| Sprangletop | (SPR) | *Leptochloa dubia.* |

Seeds of selected plants were planted in flats or pots. For preemergence tests, immediately after planting, the test compound was sprayed directly onto the soil surface. The flats or pots were placed in the greenhouse and then watered. For postemergence tests, the seeds were allowed to germinate and grow for 10 to 21 days. Before application, each series of test plants was selected for uniformity, size and stage of development. The test plants were then treated with the test compound, returned to the greenhouse and watered.

The compound or composition to be evaluated was dissolved in an appropriate solvent, usually acetone, and sprayed over the flats or pots using a carrier volume equivalent to 234 or 268 litres per hectare at the rate of application in grams per hectare (g/Ha) specified in Table I. About two or three weeks after application of the test compound, the stage of growth of the plant was observed. Each species was evaluated on a scale of 0-100 in which 0 equals no activity and 100 equals total control.

**TABLE I -**

| **GREENHOUSE POSTEMERGENCE DATA** | | | | | | |
|---|---|---|---|---|---|---|
| **Compound or Composition** | **Rate in g/Ha** | **Rice** | **BYG** | **JUN** | **SIG** | **SPR** |
| propanil (only) | 1200 | 0 | 78 | 0 | 100 | 5 |
| propanil (only) | 1200 | 0 | 40 | 0 | no test | no test |
| anilofos (only) | 300 | 0 | 80 | 40 | 0 | 5 |
| anilofos (only) | 75 | 0 | 0 | 50 | no test | no test |
| propanil + anilofos | 1200 + 300 | 0 | 97 | 99 | 100 | 40 |
| propanil + anilofos | 1200 + 75 | 0 | 95 | 40 | 10 | 40 |
| propanil + anilofos | 1200 + 75 | 0 | 75 | 85 | no test | no test |
| propanil + anilofos | 1200 + 19 | 0 | 93 | 30 | 100 | 20 |

It is to be understood that changes and variations may be made without departing from the spirit and scope of the invention as defined by the appended claims.

## Claims

1. A herbicidal composition comprising
(i) propanil;
(ii) a compound of the formula 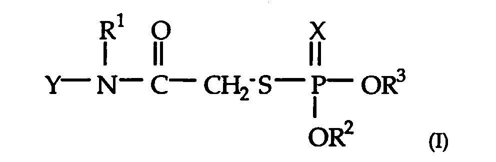 wherein
R¹ is alkyl, alkoxy, cycloalkyl, alkoxycarbonylalkyl or alkoxyalkyl;
R² and R³ are each independently alkyl, cycloalkyl or together with the oxygen atoms to which they are attached form a five or six membered heterocyclic ring containing the phosphorous atom;
X is an oxygen or a sulfur atom; and
Y is phenyl or phenyl substituted with up to three substituents independently selected from halogen atoms, nitro, cyano, alkyl, haloalkyl, alkoxy and haloalkoxy; or is thienyl or thienyl substituted with up to two substituents independently selected from halogen atoms and alkyl; and
(iii) an agronomically acceptable carrier.

2. The herbicidal composition of claim 1 comprising propanil and a compound of formula (I) wherein
R¹ is (C₁-C₄)alkyl, cyclo(C₃-C₆)alkyl, (C₁-C₄)alkoxy, (C₁-C₄)alkoxycarbonyl(C₁-C₂)alkyl or (C₁-C₄)alkoxy(C₁-C₄)alkyl;
R² and R³ are each independently (C₁-C₄)alkyl, cyclo(C₃-C₆)alkyl or together with the oxygen atoms to which they are attached form a five or six membered heterocyclic ring containing the phosphorous atom;
X is an oxygen or a sulfur atom; and
Y is phenyl or phenyl substituted with up to three substituents independently selected from fluoro, chloro, bromo, nitro, cyano, (C₁-C₄)alkyl, halo(C₁-C₄)alkyl, (C₁-C₄)alkoxy and halo(C₁-C₄)alkoxy; or is thienyl or thienyl substituted with up to two substituents independently selected from fluoro, chloro, bromo and (C₁-C₄)alkyl.

3. The herbicidal composition of claim 2 comprising propanil and a compound of formula (I) wherein
R¹ is (C₂-C₄)alkyl;
R² and R³ are each independently (C₁-C₃)alkyl, cyclo(C₃-C₆)alkyl or together with the oxygen atoms to which they are attached form a five or six membered heterocyclic ring containing the phosphorous atom;
X is an oxygen or a sulfur atom; and
Y is phenyl, 3-methylphenyl, 4-methylphenyl, 2,6-dimethylphenyl, 3-methoxyphenyl, 4-methoxyphenyl, 2-nitrophenyl, 3-nitrophenyl, 4-nitrophenyl, 4-fluorophenyl, 4-chlorophenyl, 4-bromophenyl, 3-trifluoromethylphenyl, 3,5-bis(trifluoromethyl)phenyl, 3-trifluoromethyl-4-methoxyphenyl, 3-bromophenyl, 3-chlorophenyl, 3-fluorophenyl, 3-trifluoromethoxyphenyl, 3-cyanophenyl, 4-cyanophenyl, 2-fluorophenyl, 2-chlorophenyl, 2-trifluoromethoxyphenyl 3,5-difluorophenyl, 2,3-dichlorophenyl, 2,4-dichlorophenyl, 3,4-dichlorophenyl, 2,5-dichlorophenyl, 3,5-dichlorophenyl, 2,4-difluorophenyl, 3-chloro-2-fluorophenyl, 2,5-difluorophenyl, 3-chloro-4-fluorophenyl, 3,4-difluorophenyl, 3-fluoro-5-trifluoromethylphenyl, 3-chloro-4,6-difluorophenyl, 3,4,5-trifluorophenyl, 2-thienyl, 3-thienyl, 4-chloro-2-thienyl, 5-chloro-2-thienyl, 5-chloro-3-thienyl or 2,5-dichloro-3-thienyl.

4. The herbicidal composition of claim 3 comprising propanil and a compound of formula (I) wherein
R¹ is *n*-propyl or isopropyl;
R² and R³ are each independently methyl, ethyl, *n*-propyl or isopropyl;
X is a sulfur atom; and
Y is phenyl, 4-fluorophenyl, 4-chlorophenyl, 3-fluorophenyl, 3,5-difluorophenyl, 3,5-dichlorophenyl, 3-chloro-4-fluorophenyl, 3-chlorophenyl, 2-thienyl or 5-chloro-3-thienyl.

5. The herbicidal composition of claim 4 comprising propanil and a compound of formula (I) wherein
R¹ is isopropyl;
R² and R³ are each independently methyl, ethyl, n-propyl or isopropyl; and
Y is 4-fluorophenyl or 4-chlorophenyl.

6. The herbicidal composition of claim 5 comprising propanil and anilofos.

7. A method of controlling weed species in rice comprising applying a herbicidally effective amount of a composition comprising
(i) propanil,
(ii) a compound of the formula 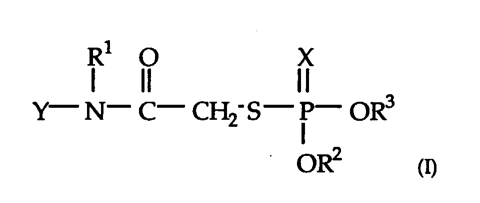 wherein
R¹ is alkyl, alkoxy, cycloalkyl, alkoxycarbonylalkyl or alkoxyalkyl;
R² and R³ are each independently alkyl, cycloalkyl or together with the oxygen atoms to which they are attached form a five or six membered heterocyclic ring containing the phosphorous atom;
X is an oxygen or a sulfur atom; and
Y is phenyl or phenyl substituted with up to three substituents independently selected from halogen atoms, nitro, cyano, alkyl, haloalkyl, alkoxy and haloalkoxy; or is thienyl or thienyl substituted with up to two substituents independently selected from halogen atoms and alkyl; and
(iii) an agronomically acceptable carrier to the weed, to the locus of the weed or to the growth medium of said weed.

8. The method of claim 7 for controlling weed species in rice wherein the weeds controlled are Barnyardgrass, Junglerice, Signalgrass and Sprangletop.

9. The method of claim 8 wherein the weeds controlled are Barnyardgrass and Junglerice.

10. The method of claim 7 wherein the relative proportion of the amount of propanil to a compound of formula (I) varies from about 64 to about 4 parts by weight of propanil to about one part by weight of a compound of formula (I).

11. The method of claim 10 wherein the proportion is from about 32 to about 4 parts by weight of propanil to about one part by weight of a compound of formula (I).

12. The method of claim 10 wherein the proportion is from about 16 to about 4 parts by weight of propanil to about one part by weight of a compound of formula (I).

13. The method of claim 7 wherein the compound of formula (I) is anilofos.
